# EUROPEAN PATENT APPLICATION

(11) **EP 3 702 989 A1**
(43) Date of publication of application: **02.09.2020**
(21) Application number: 20159454.6
(22) Date of filing: 26.02.2020
(51) Int. Cl.: G06Q 10/10, G06Q 50/04, G06Q 50/10

(54) **DATABASE FOR CE RELATED HAZARD SOLUTIONS**

(30) Priority: 26.02.2019 DK PA201970119
(71) Applicant: Bowitek ApS, 7000 Fredericia (DK)
(72) Inventor: PETERSEN, Thomas Thillemann, 8920 Randers (DK)
(74) Representative: Tellefsen, Jens J.

(57) **Abstract**

The object of the present invention is to provide an easy, fast and agile method for producing and handling reliable CE related documentation according to the rules and directive of the CE marking process, especially the harzard procedure. Furthermore the present invention also provides a database, which is accessible using a graphic user interface and/or a program.

This is provided by presenting a method of making at least one CE related documentation, comprising at least one user interface, where at least one user uses said user interface to access a computer, wherein the CE related documentation is generated by following acts of, - providing a template database, - providing at least one processing template file in said template database, where said processing template file comprises one or more CE related documentation acts, - selecting at least one of said processing template file, - processing at least one of said CE related documentation acts provided by said processing template file, and - generating said CE related documentation completely or partially according to the CE related documentation acts in said processing template file.

## Description

### Field of the Invention

The present invention relates to devices, methods and programs for providing a solution handling the overview of rules, regulation and directives for harmonizing the health and safety requirements in form of CE related hazards and related documentation.

### Background of the Invention

Directives and standards have the aim of harmonizing the health and safety requirements on the basis of a high level of protection of health and safety for workers and citizens.

CE marking is a mark that indicates conformity with health, safety, and environmental protection standards for products sold within the European Economic Area (EEA). The CE mark is the manufacturer's declaration that the product meets the requirements of the applicable EC directives. Responsibility for CE marking lies with whoever puts the product on the market in the EU, i.e. an EU-based manufacturer, the importer or distributor of a product made outside the EU, or an EU-based office of a non-EU manufacturer.

There are certain rules underlying the procedure to affix the CE marking:
Products subject to certain EU directive(s) or EU regulations providing for CE marking have to be affixed with the CE marking before they can be placed on the market.

Manufacturers, importers or distributors have to check, on their sole responsibility, which EU legislation they need to apply for their products. The manufacturers, importers or distributors are bound to draw up an EU declaration of conformity or a declaration of performance (for Construction Products) and affixes the CE marking on the product. If stipulated in the directive(s) or regulation(s), an authorized third party (Notified Body) may in some situations be involved in the conformity assessment procedure or in setting up a production quality system; this must be taken into consideration also by the manufactures, importers and/or distributors.

Depending on the level of risk of the product, the CE marking is affixed to a product by the manufacturer or authorized representative who needs to ensure that the product meets all the CE marking requirements. In some cases, it is self-certified by the manufacturer, importer and/or distributor to ensure the correct documentation level and following prepare a declaration of conformity and affix the CE marking to their own product.

The manufacturer, importer and/or distributor choose the conformity assessment procedure from a selection of modules called out by the directive for the product according to each category, where level of risk is involved. There are several modules available for the "Conformity Assessment Procedures'". Most procedures require a "type Approval" and a Production conformity assessment, which may be provided by an external consultant. A product normally needs more than one procedure/module to be implemented.

Example: One of the main legislations governing the harmonisation of essential health and safety requirements for machinery at EU level is the requirements of Directive 2006/42/EC. The directive has the aim of harmonising the health and safety requirements applicable to machinery on the basis of a high level of protection of health and safety. The requirements of Directive 2006/42/EC have been applied in order to ensure uniform interpretation and application throughout the EU, and thereby ensure a high level of protection for workers and citizens, while ensuring the free circulation of machinery on the EU market.

Both for self-certification and for an external consultant certification, the CE marking process is a very complicated and expensive process, which often requires a high level of knowledge in the area of CE marking process and the hazard process is very time consuming.

Since achieving compliance can be very complex, CE-marking conformity assessment, which may be provided by external consultant, is of great importance to avoid errors and ensures high reliability throughout the entire CE-marking process, from hazard procedure, such as risk assessment, test and verification, and setting up of the technical documentation file to the EU declaration of conformity. But the costs are very high and insurmountable for many manufactures, importers and/or distributors. The result may be that the product never reaches the market or the product meets the market without undergoing the correct CE-marking process.

### Object of the Invention

The object of the present invention is to provide an easy, fast and agile method for producing and handling reliable CE related hazard procedure according to the rules and directive of the CE marking process. Furthermore the present invention also provides a database, which is accessible using a graphic user interface and/or a program.

### Description of the Invention

The present invention addresses this by providing a computer implemented method for making at least one CE related documentation according to a hazard procedure completely or partially according to a CE marking process, comprising a computer-readable storage medium, a processing means and a user interface, where the processing means are in data communication with said user interface and said computer-readable storage medium, where at least one user uses said user interface to access said computer-readable storage medium, comprising at least one user interface, where at least one user uses said user interface to access a computer, wherein the CE related documentation is generated by following acts of:
- providing a template database,
- providing at least one processing template file in said template database, where said processing template file comprises one or more CE related documentation acts,
- selecting at least one of said processing template file,
- processing at least one of said CE related documentation acts provided by said processing template file,
- generating said CE related documentation completely or partially according to the CE related documentation acts in said processing template file.

It is the responsibility of the manufacturers, importers and/or distributors to draw up an EU declaration of conformity, EC declaration of incorporation or a declaration of performance for a construction product and/or affixes the CE marking on a product. The product may be placed on the market only if it complies with the provisions of all applicable directives and regulations and if the conformity assessment procedure has been carried out accordingly.

Depending on the level of risk of the product, the CE marking is affixed to a product by the manufacturer or authorized representative who needs to ensure that the product meets all the CE marking requirements. In some cases when a product has minimal risk, it can be self-certified by a manufacturer making a declaration of conformity and affixing the CE marking to their own product. Often an external consultant with relevant expertise is hired to help prepare the CE related material, such as the documentation etc.

CE marking is the final stage of a CE marking process as specified in the relevant Directive for the product. The CE marking process is concerned with a plurality of procedures, such as the hazard procedure, which may include risk assessment, test and verification procedure, checklists and documentation, according to following tasks, in the way of:
- assessing the risks presented by a product throughout its life cycle.
- meeting safety objectives by design and construction.
- taking account of the current best practice to ensure the safety for that product.

The CE marking process may be carried out on a computer, where the manufacturers, importers and/or distributors being a user of a CE marking program select the directive and/or standards manually, and inserts the information into sheets manually, when working out an EU declaration of conformity or a declaration of performance for a construction product. The user must be familiar with all the aspect of the rules, regulation, directives and standards to meet the health and safety requirements. It requires that the user has a high level of knowledge within the field of CE marking. The CE marking process may be too complicated to work out by the manufacturers, importers and/or distributors themselves, so they have to buy assistance from specialists.

The present invention provides a solution, where the user chooses the product area which covers the type of product to be CE marked. Then the user selects a template database on said computer-readable storage medium, and finds the correct processing template file in the template database which relates to the type of product. The selected processing template file comprises a plurality of hazards and hazards descriptions and associated safety measures related to said hazard procedure. The processing template file comprises all or most parts of the information needed for working out an EU declaration of conformity or a declaration of performance for a construction product, act by act. The user does not need a high level of knowledge within the field of hazard procedure to perform this hazard procedure. The hazard procedure will ensure a high reliability and reduces errors, and at the same time reduces man-hours and costs.

The hazard procedure provided by the present invention, presents a rapid and agile solution to provide a reliable and solid hazard procedure, where the user easily and whiteout a high level of knowledge may handle a plurality of tasks, such as risk assessment, test and verification, checklist processes and ensure reliable and validated documentation for the final CE marking and/or hazard approval. The hazard procedure may be performed by a user, where the user may use a processing template file provided from a template database. The processing template file comprises a plurality of CE related documentation acts related to said hazard procedure. The hazard procedure when using processing template files reduces a great amount of the costs and save a lot of man-hours doing so. Also the self-certification CE marking process, e.g. the hazard procedure may become a much easier and agile task for many manufacturers, importers and/or distributors.

A template or template file is a file that serves as a starting point for a new document. When opening a template file, it is pre-formatted in some way. Templates files can either be accessible using a computer program or be created and stored by the user using a computer program, where access means to read data from or write data to and from the template file are provided. Once the template is completed and stored in a template database, the user can edit, save and manage the result as an ordinary processing document.

A subcontractor may provide a main manufacturer with parts to a product made by the manufacturer, and where it is the main manufacturer who introduces a given product to the market. The CE documentation including the CE related documentation according to the hazard procedure may then be carried out partially by a subcontractor, so that this CE documentation covers the part of the product made by the subcontractor. The subcontractor may then send the processing template files and/or the part of the CE documentation to a main manufacturer. The main manufacturer may use the provided processing template files in an advantageous way in the further CE marking and hazard procedure. A main manufacturer may have a plurality of parts made by a plurality of subcontractors, where the subcontractors may send one or more processing template files and/or parts of the CE documentation, which may be according to a hazard procedure to a main manufacturer. The main manufacturer may then easily merge the processing template files and/or further parts of the hazard procedure into a parent processing template file. The final CE documentation according to the procedure may be made available and presented in a plurality of format, i.e. paper and/or electronic.

The present invention provides many benefits, such as:
Strategic benefits
   - Reduces risk by ensuring state-of-the-art level of compliance and safety
   - Reduces risk by making hazard exploration independent of personal competence
   - Knowledge and data in a structured and accessible way
   - Improves competitiveness with state-of-the-art safety and compliance
   - Optimises and streamlines the CE marking process and the hazard procedure within
   - Benchmark setting for hazard safety procedures
Finance Benefits
   - at least 50% cost reduction compared with usual manual methodology
   - Low Capital Expenditure to get started
   - Makes out-sourcing an easy and a low-risk option
   - Easy Re-use of work saves even more on the next projects
   - Lowers the risk on passing the Acceptance milestone
   - Less dependent on high-cost in-house expertise.
Compliance Benefits
   - Starting out with 80% of the work already done
   - Not dependent on person and/or on personal competence
   - Always same High level of quality, experience built-in, e.g. state of the art descriptions, solutions and measures,
   - easily handling of up-to-date subscription
   - High level of compliance as a result - and high level of safety
   - Efficient re-use of work for future projects

In an advantageous method of the invention, said processing template file are located in at least one group of said processing template files, where said user has access to one or more groups using a user level ID.

To be able to access the processing template file in a template database on said computer-readable storage medium, a user interface may be provided. The user interface is an easy and agile access to the data in the processing template file and generates said CE related documentation according to the CE related documentation acts provided in the processing template file. The user interface may be related to another platform and/or to another program, where the user has access to the data/information in the processing template file. The user may add and/or amend the data/information needed to continue or complete the hazard procedure.

The user may be provided with access to said template database provided said user interface using a user level ID, where said processing template file is located in at least one group of processing template files stored in said template database. The user may have access to one or more groups of said processing template files, where said groups are accessible using the user level ID, where said user has access to process the processing template files and said user has access to store processing template files in said template database.

The processing template file may be divided into groups or maps of processing template files in the template database. A user may have access to a set of one or more of the groups of processing template files depending on a category of the user's user level ID. The user level ID may be based on a licence agreement and the user level ID may be based on a data access key, user password or other secured data lock system. Using the user level ID the user may access selected processing template files in the template database.

In an advantageous method of the invention, where a plurality of CE related documentation acts related to said hazard procedure. The CE related documentation may be defined and/or based in the hazard procedure, which comprises description of risk assessment, test and verification, check-lists.

The processing template file or files may be divided into groups in relation to the directives or standards according to the hazard procedure. Following lists are examples of directives requiring CE marking, which affects the following groups related to the products:
Machinery, low voltage, equipment and protective systems intended for use in potentially explosive atmospheres, pressure equipment, active implantable medical devices (excludes surgical instruments), appliances burning gaseous fuels, cableway installations designed to carry persons, construction products, Eco-design of energy related products, electromagnetic compatibility, explosives for civil uses, hot-water boilers, in vitro diagnostic medical devices, lifts, measuring instruments, medical devices, noise emission in the environment, non-automatic weighing instruments, personal protective equipment, pyrotechnics, radio and telecommunications terminal equipment, recreational craft, restriction of the use of certain hazardous substances in electrical and electronic equipment RoHS 2, safety of toys, simple pressure vessels.

The user may either be provided with a database limited according to the user level ID and/or the user uses the user level ID may access to a plurality of groups of a template databases or groups within a templet database, where the groups may be divided according to the above mentioned groups in the directives and/or standards available. The directives and/or standards may provide the information to process the processing template file or files.

Data processing system comprising means for carrying out one or more CE related documentation acts provided by at least one processing template file, and a data processing means, where said data processing means generates a plurality of CE related documentation data, when carrying out said CE relate documentation acts.

Data processing system carries out one or more CE related documentation acts when providing a CE related documentation for a hazard procedure, comprising a computer-readable storage medium means connected to a data processing means, where said data processing means generates a plurality of CE related documentation data when carrying out said risk assessment acts provided by at least one processing template file located in a template database located on said computer-readable storage medium, where the processing template file containing said CE related documentation data, where said CE related documentation data comprises information regarding CE related documentation related to said hazard procedure, where the CE related documentation data is provided in said CE related documentation.

The data processing means process CE related documentation data based on the data according to the CE related documentation acts provided by the processing template file or processing template files or from the data input from a user.

The data processing means may be in wired or wireless data communication with the computer-readable storage medium means, so the data processing means have access to the CE related documentation data in the processing template files located in the template database on computer-readable storage medium.

The data processing means may also be in data communication with a user interface, so the user has access to the CE related documentation data in the processing template files located in the template database. The user may access one or more processing template files from different groups of template files and the user may merge the files into a new processing template file comprising a plurality of data provided by the user. The user may store the new fil in a selected template database or a new template database provided by the user.

The data processing means may also be in data communication with an input/output port, so the user has access to the input/output port for receiving or sending CE related documentation provided by the CE related documentation act in the processing template file or receiving or sending one or more processing template file to a predefined target.

The data processing means may also be in data communications with a printing device, so the user have access to the printing device for printing CE related documentation provided by the CE related documentation act in the processing template file.

In an advantageous embodiment of the invention, said at least one processing template file is distributed into at least one group of processing template files, where said user has access to one or more groups of processing template files using a user level ID.

The processing template file may be divided into groups or maps of processing template files in the template database. The data processing means processing CE related documentation data based on the data according to the CE related documentation acts provided by the processing template file or processing template files or from the data input from a user. Data processing means may have access to a set of one or more of the groups of processing template files depending on the users' user level ID.

Using the user level ID the user may access selected processing template files in the template database and processing the data using the data processing means. Using the user level ID the data processing means may have access to one or more user interfaces, so the user have access to the CE related documentation data in the processing template files located in the template database from one or more user interfaces.

Using the user level ID the data processing means may also be in data communications with an input/output port and/or printing device, or other devices such as measurement equipment etc., so the user have access to the input/output port for receiving or sending data, such as data on test/verification result and data on CE related documentation provided by the CE related documentation act in the processing template file, or receiving or sending one or more processing template file or hazard procedure related data to a predefined target.

In an advantageous embodiment of the invention, said data processing system access the processing template file in a template database related when generating the CE related documentation data.

The data processing system may be in data communication with a remote computer-readable storage medium. The data communication may be wired or wireless.

Computer program product comprising instructions for making a CE related documentation, which, when said computer program product is executed by a computer, causes the computer to carry out acts of:
- selecting at least one processing template file
- processing the CE related documentation acts provided by said processing template file,
- generating said CE related documentation according to said CE related documentation acts in said processing template file.

The CE related documentation is generated by acts of identifying said product or part of said product to be evaluated and/or approved to bear a CE marking. The CE marking may be attached to the product, so the CE marking is accessible and/or visible for a user of the product, when the product is released on the marked.

The products or part of a product to be evaluated and/or approved, may be related to a machine, apparatus, device and/or a spare part related to a machine, apparatus, device etc. The product may refer to a specific product, a product type, or a product group. Before starting the CE marking process the product must be identified so the acts in generating the CE related documentation is related to only the identified product or part of said product. The identification of the product may be retrieved from the user entering the data information. Alternatively the identification of the product may be retrieved from scanning the ID tag.

The CE related documentation is generated by acts of retrieving input from the user through the user interface regarding said product or part of said product to be evaluated and/or approved. The user or users, who are preparing the CE related documentation, may enter the data information regarding product or part of said product using the user interface. During the CE marking process the user may enter further data information.

The CE related documentation is generated by acts of providing a template database and providing at least one processing template file in said template database, where said processing template file comprises one or more CE related documentation acts. The user may select and/or suggest at least one of said processing template files related to said product or part of said product. The template file may be provided with further essential data information, when retrieving input from the user through the user interface.

The CE related documentation is generated by acts of assessing the risks presented by a product throughout said product or part of said product to be evaluated and/or approved life cycle. The risk is assessed based on the retrieved input from the user regarding said product or part of said product to be evaluated and/or approved. Every next act or part of the next act may be based on retrieved input from the user regarding said product or part of said product to be evaluated and/or approved. The act of accessing the risks may be processed involving the user to enter data information related to the risk or risks.

The CE related documentation is generated by acts of meeting the safety objectives by design and construction related to said product or part of said product to be evaluated and/or approved. The safety objectives may be based on the retrieved data information from the user during the CE marking process, where the data information regards said product or part of said product to be evaluated and/or approved, and/or the risk assessed related to the part of said product to be evaluated and/or approved. Also the user is taking account of the current best practice to ensure the safety for that product, for example when the product is taken into use on site or sites. All precautions related to the product are taken into consideration regarding safety,nNot only when installed in a predefined situation and/or location.

The CE related documentation is generated by acts of processing at least one of said CE related documentation acts provided by said processing template file, a CE marking process may be completed fully or partly, depending on the product or part of the product to be evaluated and/or approved.

The CE related documentation is generated by acts of generating said CE related documentation related to said product or part of said product completely or partially according to the CE related documentation acts in said processing template file, where the CE related documentation is accessible for the user through the user interface.

The CE related documentation is generated by acts depending on the product or part of the product to be evaluated and/or approved and the input of data information retrieved from the user through the user interface. The user may access the CE related documents and thereafter present a declaration and furthermore affix the CE marking, thereby allowing the use of the product or part of a product. The CE marking provides an visual indication that the CE marking requirements have been met for the product. The CE marking is provided by a fast, agile and well accomplished CE marking process.

Processing template file comprises for example "Machine" directive or/and standards related acts. The processing template file may comprise a plurality acts of hazards, for example the risk of being run over or thrown when using a product, such as a moving machine.

A user accesses said template database through the computer program product using a user interface. The user selects at least one processing template file located in said at least one template database on a computer-readable storage medium. The template database comprises at least one group of processing template files. The group may be divided into subject groups and/or subgroups, such as "type of products", "description", "hazards", "measures" etc. The computer program product may provide such list or lists of subjects of groups and/or sub groups to the user through the interface. Each group and/or subgroup contains processing template files with one or more predefined CE related documentation acts related to said process.

Some of the groups comprises processing template files with predefined CE related documentation acts which may be used in the test/validating process, and/or in the process, and/or in the documentation process etc.

In an advantageous embodiment of the invention, said computer program product is a sub product of another computer program product, such as being an application or a module to a main computer program product.

A CE marking computer program product, such as "Safexpert", provides software for hazard procedure to provided relevant hazard related documentation with a modular structure, according to Machinery Directive and Low Voltage Directive. "Safexpert" has additional modules for special fields that provide the user with significant support in your safety-related project management and in dealing with standards and EU directives.

The computer program product may be a part of the CE marking computer program product or an additional module or modules for special fields within the CE marking computer program product. The computer program product may be in data communication with the CE marking computer program product, where the CE marking computer program product also provides a user interface. The computer program product may be an application software, "app" for short, where the computer software is designed to perform a group of coordinated functions, tasks, or activities for the benefit of the user, so the user easily may access the processing template file or files in the said template database.

In a further advantageous embodiment of the invention, where one or more executable computer program products is in data communication with said data processing means, computer-readable storage medium and said user interface, where said computer program product controls the data communication between said processing template file to and from said user interface, by using data processing means, where said computer program product is in data communication with a remote computer using an user level ID.

The computer program product is in data communication with the CE marking computer program product, where the CE marking computer program product also provides a user interface, the computer program product controls the accessibility to the template database from the user interface, depending on the user's access level. The access level is defined by access to a limited number of processing template files, controlled by a set of permissions or restrictions provided by the user level ID.

For example the user level ID is provided with a level of "1", which may be considered a low level and provides an access to a very restricted number of processing template files, within a restricted number of groups in a restricted number of the template databases. If the user level ID is provided with a level of "5", which may be considered a high level, the user has access to all processing template files, within all groups in all of the template databases.

A computer-readable storage medium contains instructions to configure a readable and writable template database comprising instructions, where said readable and writable template database provides a storage for at least one processing template file, where each processing template file contains a plurality of CE related documentation acts, where a user using a user interface to access to said processing template file.

The computer-readable storage medium may be located away from the computer running of the CE marking related computer program product. The computer-readable storage medium may be in a cloud storage medium or provided in an external computer. The access through data communication from and to the computer-readable storage medium may be wired or wireless.

The invention has now been explained with reference to a few embodiments and examples, which have only been discussed in order to illustrate the many possibilities and varying design possibilities achievable with the computer implemented method for making at least one CE related documentation according to a hazard procedure, according to the present invention.

### Description of the Drawing

Fig. 1: Showing an example of CE marking process act from 1 to 6.
Fig. 2: Illustrating a user is providing the CE related documentation according to a hazard procedure
Fig. 3: Illustrating an extract of a list of groups of processing template files available divided into sections and groups.
Fig. 4: Illustrating a user interface, where a user may select a processing template file.
Fig. 5: Illustrating a user interface, where a user has selected a processing template file.
Fig. 6: Illustrating a user interface, where a user has a tree structure menu overview.
Fig. 7-8: Illustrating a user interface, where a user has pop-up windows overview.

### Detailed Description of the Invention

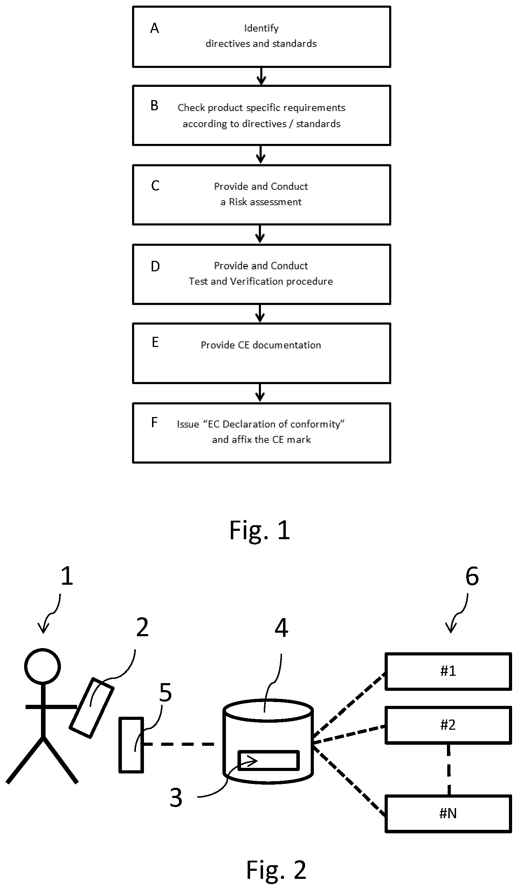

The invention will now be explained with reference to the accompanying drawings wherein the CE documentation acts provided by at least one processing template file in the CE marking process may be, as an example in fig. 1, according to these acts:

### Act A): Identify the applicable directives and standards

The first act is to identify the directives and standards, and relevant subsection for all products which are required to bear CE marking. There are more than 20 sectoral product directives requiring CE marking covering, but not limited to products such as electrical equipment, machines, medical devices, toys, pressure equipment, PPE, wireless devices and construction products. Identifying which directives and standards may be applicable, as there may be more than one, involves a simple exercise of reading the scope of each directive to establish which apply to the product (Such as the "Low Voltage Directive," 2014/35/EU and "Machinery Directive," 2006/42/EC).

The user selected product related processing template file already comprises all this information and the user may therefore easily jump on to the next act.

### Act B): Identify the applicable requirements of the directive or directives etc.

Each directive has slightly different methods of demonstrating conformity depending on the classification of the product and its intended use. Every directive has a number of 'essential health and safety requirements' that the product has to meet before being placed on the market. The best way to demonstrate that these essential requirements have been met is by meeting the requirements of an applicable 'harmonised standard,' which offers a presumption of conformity to the essential requirements, although the use of standards usually remains voluntary.

The user selected product related processing template file already comprises this information and provides the information to the user. The user may therefore quick and easy jump on to the next act.

### Act C): Provide and Conduct a Risk assessment

The process has not always been a self-declaration process, because of the complexity of the process. There are various 'attestation routes' to conformity depending on the directive, standards and classification of the product. Many products in most cases have a mandatory requirement for the involvement of an authorised third party, such as invasive medical devices, or fire alarm and extinguisher systems, pressure equipment, lifts etc.

The user selected product related processing template file already comprises this information and provided the information to the user. Also if there is a need for an authorised third party. The processing template file also provides the information act regarding involvement of an external consultant. The user may therefore quick and easy work through this act also. When the act is completed the user may then move on to the next act.

### Act D): Provide and Conduct a Test and verification procedure.

When all of the requirements have been established, the conformity of the product to the essential requirements of the directive and standards needs to be assessed. This usually involves assessment and/or testing, and may include an evaluation of the conformity of the product to the harmonized standard(s).

The user selected product related processing template file also comprises this information and provided the assessment and/or testing procedure to the user. Also if there is a need for an external consultant, the processing template file may provide the information of when and how. The user may therefore quick and easy work through this act of risk assessment and testing/verification procedure. When the act is completed and approved, the user may then move on to the next act.

### Act E): Provide CE documentation

The CE documentation is a technical documentation, usually referred to as the technical file, relating to the product or range of products that need to be compiled or generated. This information should cover every aspect relating to conformity and is likely to include details of the design, development and manufacture, importers and/or distributors of the product.

### Technical documentation may include the following information:

Technical description, drawings, circuit diagrams and photos, bill of materials, Specification and/or EU declaration of conformity for the critical components and materials used, details of calculations, test/verification reports and/or risk assessments, instructions and EU declaration of conformity etc.

The user selected product related processing template file also comprises a default layout or a user defined layout for the presentation of the technical documentation. The user may therefore quick and easy work through this act of providing a uniform and user-friendly layout. When the act of generating the technical documentation is completed and approved, the user may then move on to the next act.

### Act F): Make a declaration and affix the CE marking

When the manufacturer, importer, distributor and/or external consultant is satisfied that the product conforms to the applicable Directives, an EU declaration of conformity must be completed or, for partly completed machinery under the machinery directive, an EC declaration of incorporation.

The requirements for the declaration may vary slightly. The user easily provides the information needed. The declaration may at least include:
- Name and address of the importer and/or distributor. The user adds the information.
- Details of the product, defining the type of model, description and the serial number where applicable. The user adds the information.
- List of applicable sectoral directives and standards that have been applied. The user selected product related processing template file already has the information data implemented.
- A statement declaring that the product complies with all of the relevant requirements. The user selected product related processing template file already has the information data implemented.
- Signature, name and position of the responsible person. The user may add the information or the user selected product related processing template file already has the information data implemented.
- The date that the declaration was signed. The user selected product related processing template file already has the information data implemented.
- Details of the external consultant, where applicable. The user may add the information or the user selected product related processing template file already has the information data implemented.
- Additional directive/standard specific requirements. The user selected product related processing template file already has the information data implemented.

Once an EU declaration of conformity has been completed, the final act is to affix the CE marking to the product. When this has been done, the CE marking requirements have been met for the product.

Following lists are examples of directives requiring CE marking, which affects the following groups related to products:
Active implantable medical devices (excludes surgical instruments), appliances burning gaseous fuels, cableway installations designed to carry persons, construction products , eco-design of energy related products, electromagnetic compatibility, equipment and protective systems intended for use in potentially explosive atmospheres, explosives for civil uses, hot-water boilers, in vitro diagnostic medical devices, lifts, low voltage, machinery, measuring instruments, medical devices, noise emission in the environment, non-automatic weighing instruments, personal protective equipment, pressure equipment, pyrotechnics, radio and telecommunications terminal equipment, recreational craft, restriction of the use of certain hazardous substances in electrical and electronic equipment RoHS 2, safety of toys, simple pressure vessels.

Fig. 2 illustrates a user 1 providing the CE related documentation 2 according to a hazard procedure. The user 1 may access a preselected processing template file 3 or files 3 in the templet database 4, where the preselected processing template file or files 3 may be located in one or more groups. The user 1 is provided with data information regarding the contents in the processing template file using a user interface 5. The data information provided is for example text and references etc. The CE related documentation acts related to the preselected processing template file 3 may guide the user 1 through the CE related documentation acts step by step which is required to generate the CE related documentation or CE related documentations.

The preselected processing template file or files 3 may include information regarding one or more directives 6 and standards in cross-reference. The information may be chosen from directives such as: Machinery, low voltage, equipment and protective systems intended for use in potentially explosive atmospheres, pressure equipment etc. All the information's required for the user 1 to conduct the optimally hazard procedure, and the information's are available in the processing template file 3. Also all the description and references required in the hazard procedure is given by the processing template file. If the user 1 needs to add or remove some of the contents, the user just modified the processing template file 3 accordantly.

Ones the user 1 has accepted in contents in the preselected processing template file or files 3, the user 1 generating said CE related documentation 2 completely or partially according to the hazard procedure. The user 1 now has a complete set of CE related documentation 2 relevant for the hazard procedure, such as a description of risk assessment, test and verification/validation, and check-lists etc. The product may now be or has already been approved accordantly.

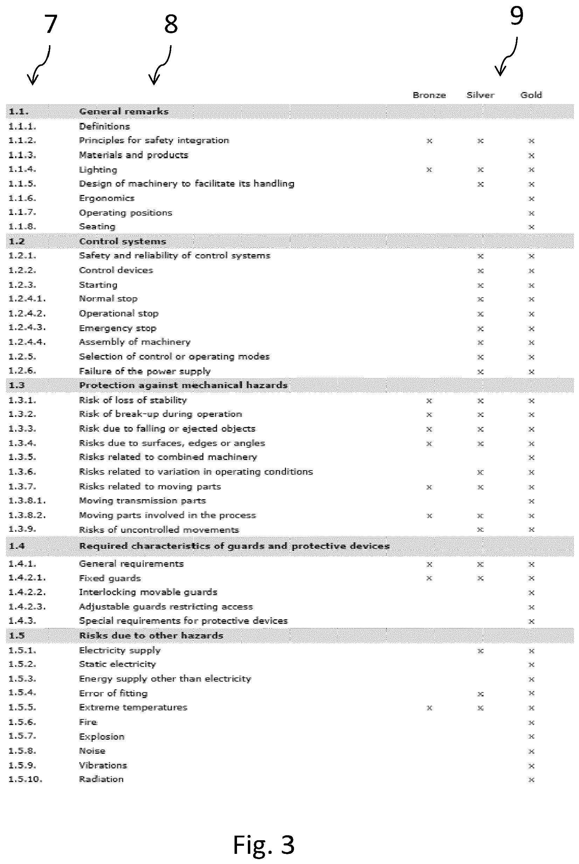

Fig. 3: Illustrating an extract of a list of sections 7 divided into groups 8 of processing template files available. The user has access to one or more predefined sections 7 and groups 8 of processing template files using a user level ID level 9.

The user has access to the groups of processing template files depending on the user's user level ID, where the accessibility to the template database from the user interface, depending on the user's access level. The access level may be defined by access to a limited number of processing template files, controlled by a set of permissions or restrictions.

The sections 7 are in relation to the "hazards" chosen from the machine directive 2006/42/EC. The "hazards", such as thermal, noise, vibration and radiation, is hazards to be taken into consideration when processing the CE marking. Within the section 7, thermal hazards, issue groups 8 need to be taken into consideration, such as burn, dehydration, discomfort, frostbite, injuries by radiation of heat source, scald and other thermal hazard. Within these groups the processing template files are located.

For example, the user level ID is provided with a level 9 related to "Bronze" which may be considered a low level and provides an access to a very restricted number of processing template files, within a restricted number of groups in a restricted number of the template databases. If the user level ID is provided with a level 9 related to "Gold" which may be considered a high level, the user has access to all of the processing template files, within all of the groups in all of the template databases. If the user level ID is provided with a level 9 related to "Silver", it may be considered a level between high and low.

The user level ID, which is provided with a level 9 related to "Bronze" has access to the processing template files within 1.1. section 7: 1.1.2. and 1.1.4, where The level 9 related to "Silver" has access to the processing template files within 1.1. section 7: 1.1.2., 1.1.4. and 1.1.5. The user level ID, which is provided with a level 9 related to "Gold", has access to the processing template files within all the 1.1. section 7, and so forth. The user who has the user level ID related to "Bronze" or "Silver", may provide products that do not require the access to certain processing template files, such as the user who has the user level ID related to "Gold" requires.

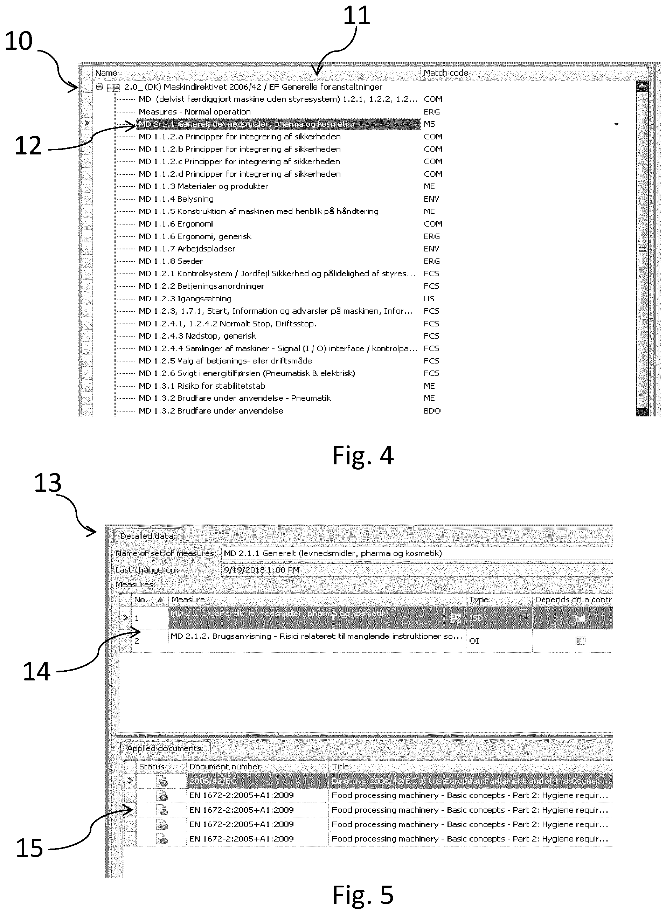

Fig. 4 illustrates a user interface, such as provided by CE marking related computer program product "Safexpert", a user may select one or more processing template files from a list of processing template files 11, which are listed as a tree structure in a window 10. The user has for example selected the processing template file "MD 2.1.1." 12 which is highlighted.

Fig. 5 illustrates a window divided into a split window 13, where a user has selected a processing template file "MD 2.1.1." 12 as showed in fig. 3. The selected processing template file 12 is shown inserted in the top of the split window 13, where other processing template files, provided in a list of processing template files 14, also may have been selected by the user or by the choice of the selected processing template file 12. A list of related directive and standards 15 is shown in the other half of the split window 13.

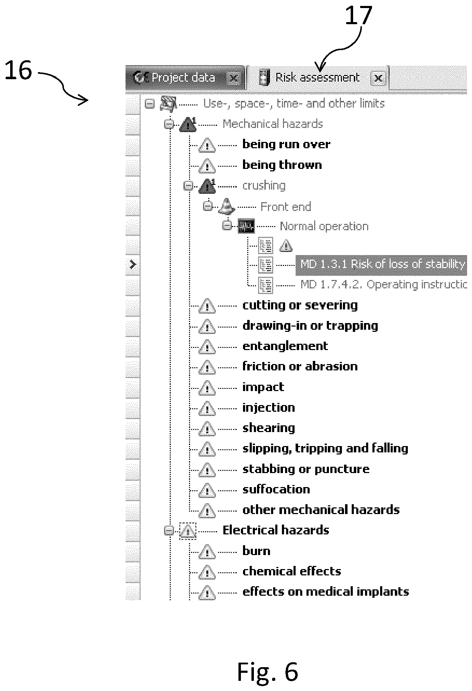

Fig. 6 illustrates a user interface, where a user has a tree structure menu 16 overview provided in a tab of Risk assessment 17 providing a list of groups and subgroups comprising processing template file within the field of mechanical hazards. If the user did not have access to a list of processing template files, the user must provide new files into the CE marking related computer program product. The description and the references must be provided manually by the user, and certainly the user must know where to find the information in the directives and the standards. It is a very time consuming and difficult process.

Now the list of processing template files is provided and the user can now select the processing template files the user needs. The list provides a processing template file: "MD 1.3.1 Risk of loss of stability", which is highlighted, among others. The processing template file is provided by selecting "Crushing - Front end - Normal operation". This processing template file is also shown in the list of processing template files 11 in window 10, shown in fig. 3. Furthermore is the processing template file: "MD 1.7.4.2. Operating instructions been selected, when choosing the path "Crushing - Front end - Normal operation".

The tree structure menu 16 is showing all acts in the CE marking process related to directives and standards that the user must take into consideration when going through the hazard procedure. All information is gathered in one cluster providing a total overview over the hazard procedure for a product. Every act provided in the tree structure menu is provided with a map indicator showing the user which map is provided with processed information or which map is not yet provided with sufficient processed information. All information needs to be processed before the hazard procedure act or acts are completed.

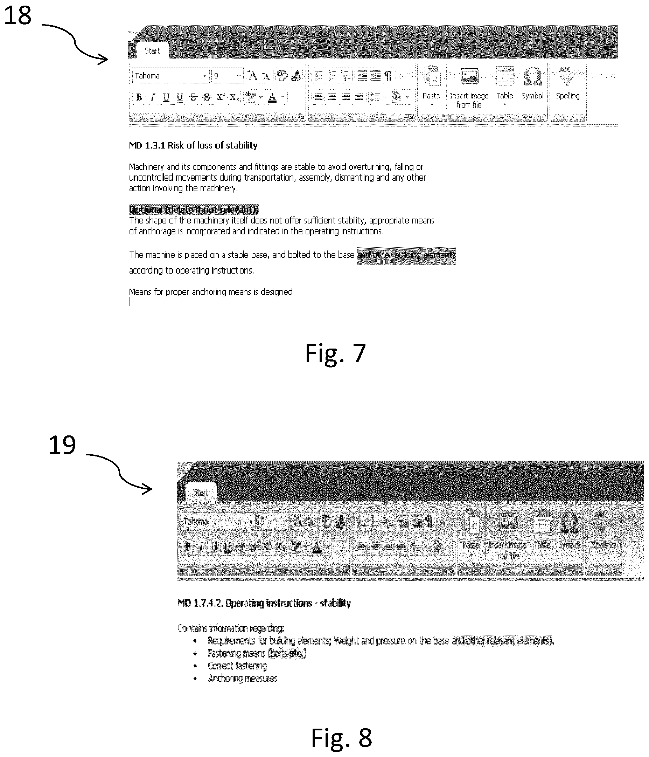

Fig. 7-8: Illustrating a user interface, where a user has pop-up windows 18, 19 overview.

When selecting a processing template file, for example the processing template file "MD 1.3.1 Risk of loss of stability", showed in fig. 5, a window 18,19 may pop-up as shown in fig. 6. The "MD 1.3.1 Risk of loss of stability" is provided with prewritten text.

The user does not have to find all information and the user does not need to write the text to be inserted. The user may alter the text inside or accept the text already written in the processing template file. When the user is satisfied with the result in relation to the assignment of the product, the user is able to approve the contents of the file as processed. The same applies for fig. 7, the processing template file: "MD 1.7.4.2.

## Claims

1. Computer implemented method of making at least one CE related documentation related to a product or part of a product to be evaluated and/or approved to bear CE marking according to a hazard procedure, comprising at least one user interface, where at least one user uses said user interface to access a computer, wherein the CE related documentation is generated by following acts of:
- identifying said product or part of said product to be evaluated and/or approved
- retrieving input from the user through the user interface regarding said product or part of said product to be evaluated and/or approved,
- providing a template database,
- providing at least one processing template file in said template database, where said processing template file comprises one or more CE related documentation acts,
- selecting at least one of said processing template file related to said product or part of said product,
- processing at least one of said CE related documentation acts provided by said processing template file,
- generating said CE related documentation related to said product or part of said product completely or partially according to the CE related documentation acts in said processing template file, where the CE related documentation is accessible for the user through the user interface.

2. Computer implemented method according to claim 1, where said processing template file are located in at least one group of said processing template files, where said user has access to one or more groups using a user level ID.

3. Computer implemented method according to claim 1 or 2, where a plurality of CE related documentation acts related to a CE marking process.

4. Data processing system comprising means for carrying out one or more CE related documentation acts provided by at least one processing template file, and a data processing means, where said data processing means generates a plurality of CE related documentation data, when carrying out said CE related documentation acts.

5. Data processing system according to claim 4, where said at least one processing template file is distributed into at least one group of processing template files, where said user has access to one or more groups of processing template files using a user level ID.

6. Data processing system according to claim 4 or 5, where said data processing system access the processing template file in a template database related when generating the CE related documentation data.

7. Computer program product comprising instructions for making a CE related documentation, which, when said computer program product is executed by a computer, causes the computer to carry out acts of:
- selecting at least one processing template file
- processing the CE related documentation acts provided by said processing template file,
- generating said CE related documentation according to said CE related documentation acts in said processing template file.

8. Computer program product according to claim 7, where said computer program product is a sub product of another computer program product, such as being an application or a module to a main computer program product.

9. Computer program product according to claim 7, where one or more executable computer program products is in data communication with said data processing means, computer-readable storage medium and said user interface, where said computer program product controls the data communication between said processing template file to and from said user interface, by using data processing means, where said computer program product is in data communication with a remote computer using a user level ID.

10. A computer-readable storage medium containing instructions to configure a readable and writable template database comprising instructions, where said readable and writable template database provides a storage for at least one processing template file, where each processing template file contains a plurality of CE related documentation acts related to a product or part of a product, where a user using a user interface to access to said processing template file.
